(19) **Europäisches Patentamt European Patent Office Office européen des brevets**

(11) **EP 4 640 432 A1**

(12) **EUROPEAN PATENT APPLICATION**
published in accordance with Art. 153(4) EPC

(43) Date of publication:
29.10.2025 Bulletin 2025/44

(21) Application number: 23906897.6

(22) Date of filing: 14.12.2023

(51) International Patent Classification (IPC):
*B32B 27/32* (2006.01)    *B65D 65/40* (2006.01)

(52) Cooperative Patent Classification (CPC):
B32B 27/32; B65D 65/40

(86) International application number:
PCT/JP2023/044864

(87) International publication number:
WO 2024/135533 (27.06.2024 Gazette 2024/26)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 22.12.2022 JP 2022205631

(71) Applicant: Toppan Holdings Inc.
Tokyo 110-0016 (JP)

(72) Inventors:
• ONO, Yasunori
  Tokyo 110-0016 (JP)
• OGIHARA, Yu
  Tokyo 110-0016 (JP)
• YAMADA, Mikinori
  Tokyo 110-0016 (JP)

(74) Representative: Hoffmann Eitle
Patent- und Rechtsanwälte PartmbB
Arabellastraße 30
81925 München (DE)

(54) **LAMINATE AND PACKAGING BAG**

(57) This laminate includes at least a substrate layer, an intermediate layer, and a sealant layer. The substrate layer is disposed on one outermost surface of the laminate, and the sealant layer is disposed on the other outermost surface of the laminate. The substrate layer, the intermediate layer, and the sealant layer each contain polypropylene. An inorganic oxide layer and a gas barrier coating layer are provided on a surface of the substrate layer that faces the intermediate layer, or on at least one surface of the intermediate layer. $T_1$ and $T_2$ satisfy the conditions below, where $T_1$ is a softening temperature at a surface of the substrate layer, and $T_2$ is a softening temperature at a surface of the sealant layer measured by local thermal analysis (LTA). $T_1 > 200°C$ $T_2 < 150°C$

FIG.1

EP 4 640 432 A1

**Description**

[Technical Field]

The present disclosure relates to a laminate and a packaging bag.

[Background Art]

There are known laminates provided with a base film made of a biaxially stretched PET (polyethylene terephthalate) film exhibiting excellent heat resistance and toughness, and a sealant layer made of a polyolefin film such as polyethylene or polypropylene (for example, see PTL 1).

[Citation List]

[Patent Literature]

PTL 1: JP 2017-178357 A

[Summary of the Invention]

[Problem to be Solved by the Invention]

The problem of plastic waste is receiving worldwide attention, and the demand for environmentally friendly packaging materials is increasing toward the realization of a circular economy society. With regard to packaging materials, many global companies have set targets for enhanced plastic resource recycling, and have proposed various measures. Furthermore, in the United States, recycling routes from collection to reuse of PE (polyethylene) are beginning to be established, and efforts toward recycling based on mono-materials (single materials) are accelerating worldwide. That is, even in laminates for packaging, where high performance has conventionally been achieved by combining a variety of different materials, the use of mono-materials is being sought.

In retort packaging materials, in a case where a packaging material made of a conventional multi-material (composite material) is to be made from a mono-material, it is conceivable to change to a packaging material made solely of PP (polypropylene) from the viewpoint of the sealant characteristics. However, when a packaging material is made from a mono-material, the melting points of the innermost layer (the layer on the contents side) and the outermost layer become very close to each other.

Because the outermost layer is the part that is most exposed to heat in a heat sealing step that is performed when producing a bag, a film that is not easily heat sealed is used; however, when a high temperature is applied to fuse a sealant, which is the innermost layer in the heat sealing step, the outermost layer becomes deformed due to heat shrinkage, causing problems such as distortion of the bag, reduced transportability, and reduced workability when sealing the contents. For this reason, in a laminate using polypropylene as the innermost layer and the outermost layer, the range (tolerance) of the heat sealing temperature at which heat shrinkage of the laminate can be suppressed while ensuring sufficient seal strength is narrow, and even a slight deviation in the heat sealing temperature from a predetermined value tends to cause a decrease in the seal strength or lead to heat shrinkage, resulting in a problem that the mass producibility of the packaging bag is likely to decrease.

The present disclosure has been made in view of the circumstances above, and has an object of providing a laminate using polypropylene as an innermost layer and an outermost layer, and which is capable of widening the tolerance in the heat sealing temperature, and a packaging bag using the laminate.

[Solution to Problem]

In order to solve the problems described above, a laminate and a packaging bag as described below are provided.

[1] A laminate comprising at least a substrate layer, an intermediate layer, and a sealant layer, wherein the substrate layer is disposed on one outermost surface of the laminate, and the sealant layer is disposed on another outermost surface of the laminate, the substrate layer, the intermediate layer, and the sealant layer each contain polypropylene, an inorganic oxide layer and a gas barrier coating layer are provided on a surface of the substrate layer that faces the intermediate layer, or on at least one surface of the intermediate layer, and when $T_1$ is a softening temperature at a surface of the substrate layer, and $T_2$ is a softening temperature at a surface of the sealant layer measured by local

thermal analysis (LTA), $T_1$ and $T_2$ satisfy the following conditions.

$$T_1 > 200°C$$

$$T_2 < 150°C$$

[2] The laminate according to [1], wherein $T_1$ and $T_2$ satisfy the following condition.

$$(T_1 - T_2) > 53°C$$

[3] The laminate according to [1] or [2], wherein in a case where heat sealing is performed with the sealant layers of the laminate facing each other using a heat sealer having an upper side made of metal, and a lower side made of silicone rubber, under conditions of an upper seal actual temperature of 145°C, a lower seal actual temperature of 90°C, a seal pressure of 0.3 MPa, and a heating time of 1 second, a seal strength of an obtained sealed portion is 20 N/15 mm or more.

[4] The laminate according to any one of [1] to [3], wherein in a case where heat sealing is performed with the sealant layers of the laminate facing each other using a heat sealer having an upper side made of metal, and a lower side made of silicone rubber, under conditions of an upper seal actual temperature of 160°C, a lower seal actual temperature of 90°C, a seal pressure of 0.3 MPa, and a heating time of 1 second, a heat shrinkage ratio of an obtained sealed portion is less than 3%.

[5] The laminate according to any one of [1] to [4], wherein in a case where heat sealing is performed with the sealant layers of the laminate facing each other using a heat sealer having an upper side made of metal, and a lower side made of silicone rubber, under conditions of a lower seal actual temperature of 90°C, a seal pressure of 0.3 MPa, and a heating time of 1 second while varying an upper seal actual temperature, and when a minimum temperature of the upper seal actual temperature at which a seal strength of an obtained sealed portion reaches 20 N/15 mm is denoted by $T_L$, and a maximum temperature of the upper seal actual temperature at which a heat shrinkage ratio of the obtained sealed portion can be maintained at less than 3% is denoted by $T_H$, a value of $T_H - T_L$ is 15°C or more.

[6] The laminate according to any one of [1] to [5], wherein $T_2$ satisfies the following condition.

$$T_2 \geqq 135°C$$

[7] The laminate according to any one of [1] to [6], wherein the substrate layer and the intermediate layer, and the intermediate layer and the sealant layer, are each adhered via an adhesive agent layer using a two-component curing urethane-based adhesive agent.

[8] The laminate according to [7], wherein at least one of the substrate layer and the intermediate layer, and the intermediate layer and the sealant layer are adhered via an adhesive agent layer using a solvent-free two-component curing urethane-based adhesive agent.

[9] A packaging bag obtained by producing a bag using the laminate according to any one [1] to [8].

[Advantageous Effects of the Invention]

According to the present disclosure, it is possible to provide a laminate using polypropylene as an innermost layer and an outermost layer, and which is capable of widening the tolerance in heat sealing temperature, and a packaging bag using the laminate.

[Brief Description of the Drawings]

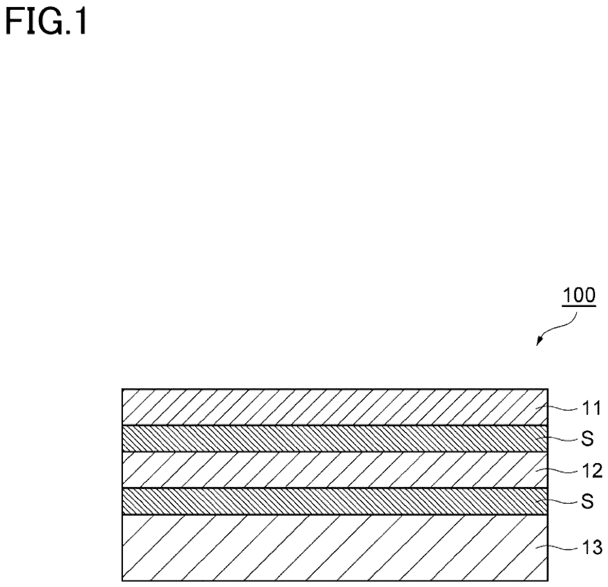

Fig. 1 is a schematic cross-sectional view of a laminate according to an embodiment.

[Description of the Embodiments]

Hereinafter, preferred embodiments of the present disclosure will be described in detail, with reference to the drawings in some cases. Note that, in the drawings, the same or corresponding parts are denoted by the same reference signs, and duplicated descriptions are omitted. Furthermore, the dimensional ratios in the drawings are not limited to those shown in the drawings.

<Laminate>

Fig. 1 is a schematic cross-sectional view of a laminate according to an embodiment. The laminate 100 shown in FIG. 1 includes a substrate layer 11, an intermediate layer 12, and a sealant layer 13 in this order. The substrate layer 11 and the intermediate layer 12, and the intermediate layer 12 and the sealant layer 13, may each be adhered using an adhesive agent layer S. The substrate layer, the intermediate layer, and the sealant layer each contain polypropylene. The substrate layer, the intermediate layer, and the sealant layer may contain a polypropylene film. In the laminate, from the viewpoint of improving the gas barrier properties with respect to water vapor and oxygen, the surface of the substrate layer 11 that faces the intermediate layer 12, or at least one surface of the intermediate layer 12 is provided with an inorganic oxide layer and a gas barrier coating layer. The substrate layer 11 is disposed on one outermost surface of the laminate 100, and the sealant layer 13 is disposed on the other outermost layer of the laminate 100. The substrate layer 11 is also referred to as the outermost layer of the laminate 100 (the layer on the opposite side to the contents side when made into a packaging bag). The sealant layer 13 is also referred to as the innermost layer of the laminate 100 (the layer on the contents side when made into a packaging bag).

[Substrate Layer 11]

The substrate layer is a layer that serves as one of the support bodies, and contains polypropylene. The substrate layer may contain a polypropylene film, and may be made of a polypropylene film.

The polypropylene film may be an acid-modified polypropylene film obtained by graft-modifying polypropylene using an unsaturated carboxylic acid, an acid anhydride of an unsaturated carboxylic acid, an ester of an unsaturated carboxylic acid, or the like. Furthermore, as the polypropylene, polypropylene-based resins such as homopolypropylene resin (PP), propylene-ethylene random copolymer, propylene-ethylene block copolymer, and propylene-$\alpha$-olefin copolymer can be used. Here, in a random copolymer or a block copolymer, the regularity of the molecular structure is disrupted due to the inclusion of different components, which results in a tendency for the softening temperature to decrease. For this reason, it is preferable that the polypropylene that constitutes the substrate layer is homopolypropylene.

The polypropylene film constituting the substrate layer may contain various additives, such as a flame retardant, a slip agent, an anti-blocking agent, an antioxidant, a light stabilizer, a tackifier, and an antistatic agent.

The polypropylene film constituting the substrate layer is preferably a stretched polypropylene film from the viewpoint of the impact resistance, heat resistance, water resistance, dimensional stability, and the like. As a result, it is possible to prevent the substrate layer from being thermally fused in the heat sealing step that is performed when producing a bag. Furthermore, the laminate can be more preferably used in applications where retort treatment or boiling treatment is performed. The stretching method is not specifically limited, and the film may be stretched by any method as long as a dimensionally stable film can be supplied, such as stretching by inflation, uniaxial stretching, or biaxial stretching.

The thickness of the substrate layer is not particularly limited. The thickness can be 6 to 200 $\mu$m depending on the application, but from the viewpoint of reducing material use for lowering the environmental load, and from the viewpoint of obtaining excellent heat resistance, impact resistance, and excellent gas barrier properties, the thickness may be 9 to 50 $\mu$m, 12 to 38 $\mu$m, or 18 to 30 $\mu$m.

The lamination surface of the substrate layer may be subjected to various pretreatments, such as corona treatment, plasma treatment, and flame treatment to an extent that the barrier performance is not impaired, or may be provided with a coating layer such as an adhesion-enhancing layer.

It is necessary for the substrate layer to have a surface softening temperature $T_1$ (°C) measured by local thermal analysis (LTA) to satisfy the following condition.

$$T_1 > 200°C$$

As a result of $T_1$ being higher than 200°C, heat shrinkage or distortion of the laminate can be suppressed even in a case where the heat sealing temperature is increased (for example, to about 160°C). Consequently, the tolerance in the heat sealing temperature (heat sealing tolerance) of the laminate can be widened. From the viewpoint of enhancing the effect above, $T_1$ may be 201°C or higher, 203°C or higher, or 205°C or higher. The upper limit value of $T_1$ is not particularly limited, and may be, for example 220°C or lower. The softening temperature of the substrate surface may be 200°C or higher and 220°C or lower, 201°C or higher and 220°C or lower, 203°C or higher and 220°C or lower, or 205°C or higher and 220°C or lower. The softening temperature of the substrate layer surface can be adjusted by, for example, the degree of crystallinity, the molecular weight, and the mixing ratio in a copolymer. The softening temperature can also be measured by differential scanning calorimetry (DSC), but the softening temperature measured by DSC represents the softening temperature of not only the surface of the substrate layer or the sealant layer, and is a softening temperature that also includes information about other layers, such as the intermediate layer. By measuring the softening temperature by LTA, the softening temperature of the surface of the substrate layer or the sealant layer can be selectively measured.

The substrate layer may have a melting point (melting peak temperature) measured by differential scanning calorimetry (DSC) that exceeds 161°C, and the melting point may be 163°C or higher, or 165°C or higher. As a result of the melting point exceeding 161°C, there is a tendency for the desired surface softening temperature (exceeding 200°C) to be obtained. The upper limit value of the melting point is not particularly limited, and may be, for example 180°C or lower. The melting point of the substrate layer may be higher than 161°C and 180°C or lower, 163°C or higher and 180°C or lower, or 165°C or higher and 180°C or lower. The melting point of the substrate layer can be adjusted by, for example, the degree of crystallinity, the molecular weight, and the mixing ratio in a copolymer. The melting point of the substrate layer can be measured using a differential scanning calorimeter (for example, product name: DSC7000X, manufactured by Hitachi High-Tech Science Corporation) using a temperature ramp rate of 10°C/min.

[Softening Temperature Measurement Method]

The softening temperature is the temperature at which a substance such as a resin exhibits softening behavior. In the present embodiment, the softening temperature is evaluated by local thermal analysis (LTA) using an atomic force microscope, and the sample is heated by applying a voltage to a cantilever having a heater. In local thermal analysis (LTA), after measuring the shape of the measurement sample, a constant force (contact pressure) is applied to the sample surface at a specified location of the sample with the cantilever, the sample is heated while maintaining a constant contact pressure, and then the softening temperature is calculated from the temperature at which the height position (Z displacement) of the cantilever reaches a maximum value due to a change in hardness of the sample surface before and after heating. The height position of the cantilever changes due to a rise in the vertical direction of the cantilever caused by thermal expansion of the sample surface, and then due to a fall in the vertical direction of the cantilever caused by softening of the sample surface. That is, the sample reaches the softening temperature just before the fall in the cantilever position. Therefore, by converting the voltage applied to the heater of such a cantilever when the height position of the cantilever is at the maximum value into a temperature, it is possible to know the softening temperature in a local, near-surface nanoscale region.

The device used is an atomic force microscope (AFM), namely an MFP-3D-SA (product name) manufactured by Oxford Instruments, equipped with Ztherm, which is a local thermal analysis option. The AC mode (tapping mode) was used when performing the shape measurement, and the contact mode was used when performing the softening temperature measurement.

The cantilever used is an AN2-200 (product name) manufactured by Anasys Instruments, with a spring constant of 0.5 to 3.5 N/m.

The voltage application rate (temperature ramp rate) of the cantilever when measuring the softening temperature is set to 0.5 V/sec.

In Ztherm, a measurement is performed by controlling the contact pressure of the cantilever (the amount of change in a deflection amount of the cantilever) to a constant value. However, because the deflection amount of the cantilever changes with the applied voltage even without making contact with the sample, it is necessary to control the contact pressure after subtracting the deflection amount of the cantilever caused by the applied voltage. Ztherm has a Detrend correction function that acquires the change in the deflection amount of the cantilever with respect to the applied voltage, and performs a Detrend correction by applying the maximum applied voltage used in the measurement to the cantilever in a state where the cantilever is not making contact with the sample surface. In the present embodiment, after the shape measurement, a Detrend correction is performed prior to the softening temperature measurement at the maximum applied voltage used in the measurement and a voltage application rate (temperature ramp rate) of 0.5 V/sec, and then the measurement is performed. The contact pressure is set to 0.5 V.

The set value for the downward displacement of the cantilever to stop the measurement is 50 nm.

The softening point is determined as the point where the height (Z displacement) of the cantilever in the vertical direction takes the maximum value, and the applied voltage at this point is read.

In order to convert the applied voltage of the heater of the cantilever into the softening temperature, a calibration curve of the applied voltage and the melting point (melting peak temperature) is created. Using samples whose melting points (melting peak temperatures) have already been measured using a differential scanning calorimeter (DSC) as calibration samples, the softening temperatures of each calibration sample are measured at different measurement positions, a calibration line is then created by approximating the average value of the applied voltage at the softening point and the melting point (melting peak temperature) with a cubic function using the least squares method, and then used as the calibration curve. The calibration samples are a polycaprolactone pellet (melting point: 60°C), a low-density polyethylene pellet (melting point: 112°C), a polypropylene pellet (melting point: 166°C), and a biaxially stretched polyethylene terephthalate film (melting point: 255°C), and cross-sectional samples are prepared in an environment at a temperature at or below the glass transition temperature of each sample. To prepare the cross-sectional samples, an ultramicrotome and a cryosystem are used, and cross-section cutting is performed under an environment of -80°C for polycaprolactone, -140°C for low-density polyethylene, -40°C for polypropylene, and room temperature of 25°C for polyethylene terephthalate.

Using the calibration curve of the applied voltage and the melting point (melting peak temperature), the applied voltage at the softening point is converted into a temperature to obtain the softening temperature.

[Adhesion Layer]

In a case where the laminate includes the inorganic oxide layer on the substrate layer, an adhesion layer (anchor coat layer) may be provided on the surface of the substrate layer on which the inorganic oxide layer is to be laminated. The adhesion layer is provided on the substrate layer, and enables the two effects of enhanced adhesion performance between the substrate layer and the inorganic oxide layer, and enhanced smoothness of the substrate layer surface, to be obtained. Note that, as a result of an improvement in the smoothness, it becomes easier to uniformly form the inorganic oxide layer without defects, and it becomes easier for high barrier properties to be exhibited. The adhesion layer can be formed using an anchor coating agent.

Examples of anchor coating agents include polyester-based polyurethane resins and polyether-based polyurethane resins. As the anchor coating agent, a polyester-based polyurethane resin is preferable from the viewpoint of heat resistance and interlayer adhesive strength.

Although the thickness of the adhesion layer is not particularly limited, the thickness is preferably in a range of 0.01 to 5 $\mu$m, more preferably in a range of 0.03 to 3 $\mu$m, and particularly preferably in a range of 0.05 to 2 $\mu$m. If the thickness of the adhesion layer is greater than or equal to the lower limit mentioned above, more sufficient interlayer adhesive strength tends to be obtained, whereas if the thickness is less than or equal to the upper limit mentioned above, the desired gas barrier properties tend to be easily achieved.

As the method of applying the adhesion layer onto the substrate layer, any known application method can be used without particular limitation, and examples of the method include immersion methods (dipping methods), and methods using a spray, a coater, a printer, a brush, and the like. In addition, examples of the types of coaters and printers used in these methods, and the application method include gravure coaters, reverse roll coaters, micro gravure coaters, combined chamber and doctor coaters, air-knife coaters, dip coaters, bar coaters, comma coaters, and die coaters using the direct gravure method, reverse gravure method, kiss reverse gravure method, and offset gravure method.

The coating amount of the adhesion layer is preferably 0.01 to 5 g/m$^2$, and more preferably 0.03 to 3 g/m$^2$ in terms of mass per m$^2$ after the anchor coating agent is applied and dried. If the mass per m$^2$ after application and drying of the anchor coating agent is greater than or equal to the lower limit mentioned above, film formation tends to be sufficient, whereas if the mass per m$^2$ is less than or equal to the upper limit mentioned above, drying tends to be sufficient and the solvent tends not to remain.

The method of drying the adhesion layer is not particularly limited, and examples include a method based on natural drying, a method of drying in an oven set at a predetermined temperature, a method of using a drying machine attached to the coater described above, such as an arch dryer, a floating dryer, a drum dryer, or an infrared ray dryer. Further, the drying conditions can be appropriately selected depending on the drying method, and for example, in a method in which drying is performed in an oven, the drying is preferably performed at a temperature of 60 to 100°C for about 1 second to 2 minutes.

As the adhesion layer, a polyvinyl alcohol-based resin can be used instead of the polyurethane resin described above. The polyvinyl alcohol-based resin may be any resin having a vinyl alcohol unit formed by saponifying a vinyl ester unit, and examples include polyvinyl alcohol (PVA) and ethylene-vinyl alcohol copolymer (EVOH).

In a case where a polyvinyl alcohol-based resin is used as the adhesion layer, examples of the method of forming the adhesion layer include coating using a polyvinyl alcohol-based resin solution, and multi-layer extrusion.

[Inorganic Oxide Layer]

The inorganic oxide layer contributes to improving the gas barrier properties. Examples of the inorganic oxide contained in the inorganic oxide layer include aluminum oxide, silicon oxide, magnesium oxide, and tin oxide. From the viewpoint of the transparency and barrier properties, the inorganic oxide may be selected from a group consisting of aluminum oxide, silicon oxide, and magnesium oxide. Furthermore, from the viewpoint obtaining excellent tensile elongation during processing, it is preferable that the inorganic oxide layer is a layer using silicon oxide. By using an inorganic oxide layer containing silicon oxide, higher barrier properties can be obtained with a very thin layer in a range that does not affect the recyclability of the laminate.

In a case where the inorganic oxide layer contains silicon oxide, the O/Si ratio of the inorganic oxide layer is preferably 1.7 or more. When the O/Si ratio is 1.7 or more, the proportion of the content of metallic Si is suppressed, and good transparency tends to be easily obtained. In addition, the O/Si ratio is preferably 2.0 or less. When the O/Si ratio is 2.0 or less, the crystallinity of SiO becomes high, and the inorganic oxide layer can be prevented from becoming too hard, which enables good tensile resistance to be obtained. As a result, it is possible to suppress the occurrence of cracks in the inorganic oxide layer when the gas barrier coating layer is laminated. In addition, although the substrate layer or the intermediate layer can sometimes shrink after being formed into a packaging bag due to heat during boiling or retort treatment, by setting the O/Si ratio to 2.0 or less, the inorganic oxide layer can easily follow the shrinkage, which enables a reduction in the barrier properties to be suppressed. In order to obtain these effects more sufficiently, the O/Si ratio of the inorganic oxide layer is preferably 1.75 or more and 1.9 or less, and more preferably 1.8 or more and 1.85 or less.

The O/Si ratio of the inorganic oxide layer can be obtained by the X-ray photoelectron spectroscopy (XPS) method. For example, measurements can be performed using an X-ray photoelectron spectroscopy analysis device (product name: JPS-90MXV, manufactured by JEOL Ltd.) as the measurement device, and using non-monochromatized MgK$\alpha$ (1,253.6 eV) as the X-ray source at an X-ray output of 100 W (10 kV-10 mA). In the quantitative analysis used to determine the O/Si ratio, it is possible to use relative sensitivity factors of 2.28 for O1s and 0.9 for Si2p, respectively.

The thickness of the inorganic oxide layer is preferably 10 nm or more and 50 nm or less. If the film thickness is 10 nm or more, sufficient water vapor barrier properties can be obtained. Furthermore, if the film thickness is 50 nm or less, the occurrence of cracks due to deformation caused by internal stress in the thin film can be suppressed, and a reduction in the water vapor barrier properties can be suppressed. Note that, if the film thickness exceeds 50 nm, the cost is likely to increase due to an increase in the amount of material used and a longer film formation time, and therefore, this is not preferable from an economic viewpoint. From the same viewpoints as above, the thickness of the inorganic oxide layer is more preferably 20 nm or more and 40 nm or less.

The inorganic oxide layer can be formed, for example, by vacuum deposition. In the vacuum deposition, physical vapor deposition or chemical vapor deposition can be used. Examples of physical vapor deposition include, but are not limited to, vacuum vapor deposition, sputtering, and ion plating. Examples of the chemical vapor deposition include, but are not limited to, thermal CVD, plasma CVD, and photo CVD.

Specifically, in the vacuum deposition, resistance heating vacuum vapor deposition, electron beam (EB) heating vacuum vapor deposition, induction heating vacuum vapor deposition, sputtering, reactive sputtering, dual magnetron sputtering, plasma-enhanced chemical vapor deposition (PECVD), and the like are particularly preferably used. However, in view of the productivity, vacuum vapor deposition is currently the most preferable. As the heating means of the vacuum vapor deposition, it is preferable to use one of electron beam heating, resistive heating, and inductive heating.

[Gas Barrier Coating Layer]

The gas barrier coating layer serves to protect the inorganic oxide layer, as well as contributing to improving the gas barrier properties, and exhibiting high gas barrier properties through a synergistic effect with the inorganic oxide layer. The gas barrier coating layer may be a layer formed using a gas barrier coating layer forming composition, which contains at least one type of substance selected from a group consisting of hydroxyl group-containing polymer compounds, metal alkoxides, silane coupling agents, and hydrolysates thereof.

The gas barrier coating layer can be formed using a gas barrier coating layer forming composition (hereinafter also referred to as a coating agent) containing, as a main component, an aqueous solution or a water/alcohol mixed solution containing at least one substance selected from a group consisting of hydroxyl group-containing polymer compounds, metal alkoxides, silane coupling agents, and hydrolysates thereof. From the viewpoint of more sufficiently maintaining the gas barrier properties after hot water treatment such as retort treatment, the coating agent preferably contains at least a silane coupling agent or a hydrolysate thereof, more preferably contains at least one substance selected from a group consisting of hydroxyl group-containing polymer compounds, metal alkoxides and hydrolysates thereof, and a silane coupling agent or a hydrolysate thereof, and even more preferably contains a hydroxyl group-containing polymer compound or a hydrolysate thereof, a metal alkoxide or a hydrolysate thereof, and a silane coupling agent or a hydrolysate thereof. For example, the coating agent can be prepared by mixing, with a solution in which the hydroxyl-containing polymer compound, which is a water-soluble polymer, has been dissolved in an aqueous solvent (water, or a water/alcohol mixture), a metal alkoxide and a silane coupling agent, either directly or after being treated in advance by hydrolysis or the like.

Examples of the hydroxyl group-containing polymeric compound used in the coating agent include polyvinyl alcohol, polyvinylpyrrolidone, starch, methyl cellulose, carboxymethyl cellulose, and sodium alginate. Among these, polyvinyl alcohol (PVA) is preferable because of the particularly excellent gas barrier properties obtained when used in the coating agent for the gas barrier coating layer.

Examples of the metal alkoxide include tetraethoxysilane [$Si(OC_2H_5)_4$] and triisopropoxyaluminum [$Al(O$-2'-$C_3H_7)_3$]. Tetraethoxysilane and triisopropoxy aluminum are preferable because they are relatively stable in an aqueous solvent after being hydrolyzed.

Examples of silane coupling agents include vinyltrimethoxysilane, $\gamma$-chloropropylmethyldimethoxysilane, $\gamma$-chloropropyltrimethoxysilane, glycidoxypropyltrimethoxysilane, $\gamma$-methacryloxypropyltrimethoxysilane, and $\gamma$-methacryloxypropylmethyldimethoxysilane. The silane coupling agent may be a multimer of such silane coupling agents.

A known additive such as an isocyanate compound, a dispersant, a stabilizer, a viscosity modifier, or a coloring agent may be added as necessary to the coating agent to an extent that does not impair the gas barrier properties. If necessary, an acid catalyst, an alkali catalyst, a photopolymerization initiator, and the like, may be added to the coating agent.

The thickness of the gas barrier coating layer is preferably 50 to 1,000 nm, and more preferably 100 to 500 nm from the viewpoint of obtaining excellent gas barrier properties while keeping the content of polypropylene in the laminate at 90% by mass or more. When the thickness of the gas barrier coating layer is 50 nm or more, more sufficient gas barrier properties tend to be obtained, and when the thickness is 1,000 nm or less, sufficient flexibility tends to be maintained.

The coating agent for forming the gas barrier coating layer can be applied, for example, by dipping, roll coating, gravure coating, reverse gravure coating, air-knife coating, comma coating, die coating, screen printing, spray coating, or the gravure offset method. The coating film formed by applying the coating agent can be dried, for example, by hot air drying, hot roll drying, high frequency irradiation, infrared irradiation, UV irradiation, or a combination of these methods.

The temperature at which the coating film is dried can be, for example, 50 to 150°C, is preferably a temperature of 70 to 100°C. By setting the temperature at the time of drying within the above range, the occurrence of cracks in the inorganic oxide layer and the gas barrier coating layer can be further suppressed, and excellent barrier properties can be achieved.

[Intermediate Layer 12]

For the configuration of the intermediate layer, it is possible to appropriately refer to the content above of the description relating to the configuration of the substrate layer. The adhesion layer, the inorganic oxide layer, and the gas barrier coating layer described above may be provided on at least one surface of the intermediate layer. By providing the laminate with the intermediate layer, deformation of the laminate can be further reduced when producing a bag compared to a case where the intermediate layer is not provided.

The thickness of the intermediate layer is not particularly limited, but may be the same as the thickness of the substrate layer, and the ratio of the thicknesses of these layers (thickness of the substrate layer/thickness of the intermediate layer) may be 1.00 or more, greater than 1.00, 1.25 or more, or 1.50 or more. The substrate layer is the part that is in direct contact with, or adjacent to, the heat seal bar during heat sealing, and is the part that is particularly exposed to heat among the layers of the laminate, and is therefore prone to heat shrinkage during heat sealing. Therefore, by making the substrate layer thicker than the intermediate layer, the heat shrinkage of the substrate layer can be suppressed.

[Printed Layer]

The laminate may include a printed layer. The printed layer can be provided on at least one surface of the substrate layer, or on at least one surface of the intermediate layer. The printed layer is provided in a position that visible from the outside of the laminate for the purposes of displaying information relating to the contents, identifying the contents, improving concealment, or improving the design properties of the packaging bag. The printing method and printing ink are not particularly limited, and are appropriately selected from known printing methods and printing inks taking into consideration printability on the film, design properties such as color tone, adhesion properties, safety as a food container, and the like. Examples of the printing method that can be used include gravure printing, offset printing, gravure offset printing, flexographic printing, and inkjet printing. Among these, the gravure printing is preferably used from the viewpoints of productivity and high definition of the image.

In order to enhance the adhesion properties of the printed layer, the surface of the layer on which the printed layer is provided may be subjected to various pretreatment, such as corona treatment, plasma treatment, and flame treatment, and may be provided with a coating layer such as an adhesion-enhancing layer. Examples of the surface of the layer on which the printed layer is provided include the surface of the substrate layer or the intermediate layer, and the surface of the gas barrier coating layer.

[Adhesive Agent Layer S]

The substrate layer and the intermediate layer can be laminated via an adhesive agent layer. The adhesive agent material may be, for example, a polyester-isocyanate resin, a urethane resin, a polyether-based resin, or the like. In order to use the packaging bag in retort applications, a two-component curing urethane-based adhesive agent having retort resistance can be preferably used. In a case where a two-component curing urethane-based adhesive agent is used, because the crosslink density is higher than when a single-component curing urethane-based adhesive agent is used, high adhesion properties are more likely to be obtained even after retort treatment. Furthermore, as the two-component curing urethane-based adhesive agent, a solvent-free two-component curing urethane-based adhesive agent may be used. From the perspective of environmental considerations, the adhesive agent does not need to contain 3-glycidyloxypropyltrimethoxysilane (GPTMS).

The thickness of the adhesive agent layer is not particularly limited, but may be, for example, 0.5 to 5 $\mu$m, or 0.3 to 7 $\mu$m. If the thickness of the adhesive agent layer is 0.5 $\mu$m or more, it is easier to improve the adhesion properties between the substrate layer and the intermediate layer, and if the thickness is 5 $\mu$m or less, it is easier to improve the barrier properties and recyclability of the laminate.

[Sealant Layer 13]

The sealant layer is a layer that imparts sealing properties by heat sealing of the laminate, and contains polypropylene. The sealant layer may contain a polypropylene film, and may be made of a polypropylene film.

The polypropylene film may be an acid-modified polypropylene film obtained by graft-modifying polypropylene using an unsaturated carboxylic acid, an acid anhydride of an unsaturated carboxylic acid, an ester of an unsaturated carboxylic acid, or the like. Furthermore, as the polypropylene, polypropylene-based resins such as homopolypropylene resin (PP), propylene-ethylene random copolymer, propylene-ethylene block copolymer, and propylene-$\alpha$-olefin copolymer can be used.

The polypropylene film constituting the sealant layer is preferably a non-stretched film from the viewpoint of improving the sealing properties obtained by heat sealing.

The polypropylene film constituting the sealant layer may contain various additives, such as a flame retardant, a slip agent, an anti-blocking agent, an antioxidant, a light stabilizer, a tackifier, and an antistatic agent.

The thickness of the sealant layer is determined depending on the mass of the contents, the shape of the packaging bag, and the like, but may be a thickness of approximately 30 to 150 $\mu$m, a thickness of 40 to 100 $\mu$m, or a thickness of 50 to 80 $\mu$m.

As the method of forming the sealant layer, any known lamination method can be used, such as dry lamination in which a film-like sealant layer made of polypropylene as mentioned above is bonded with an adhesive agent such as a one-component curing or two-component curing urethane-based adhesive agent, non-solvent lamination in which a film-like sealant layer is bonded with a solvent-free adhesive agent, and extrusion lamination in which the polypropylene as mentioned above is heated and melted, extruded into a curtain shape, and then bonded. In non-solvent lamination, a solvent-free two-component curing urethane-based adhesive agent may be used as the solvent-free adhesive agent. These lamination methods can be used when the substrate layer and the intermediate layer are laminated.

In a case where non-solvent lamination is used, because an organic solvent is not contained as a component of the adhesive agent, the amount of solvent that remains in the laminate can be reduced. Furthermore, in a case where a laminate including a substrate layer made of stretched polypropylene and an intermediate layer made of stretched polypropylene is produced using dry lamination, the temperature during drying needs to be lower than that used for a laminate using polyester-based materials to prevent heat shrinkage of the substrate layer. In this case, the solvent in the adhesive agent may not be sufficiently removed by evaporation, and may remain in the laminate, resulting in an unpleasant odor due to the remaining solvent. By using a solvent-free adhesive agent, the amount of solvent that remains as described above can be further reduced.

Furthermore, by using non-solvent lamination, the adhesive agent layer can be made thinner than when using dry lamination. As a result, the proportion of the content of polypropylene in the entire laminate can be improved. In addition, by making the adhesive agent layer thinner, heat conduction from the heat seal bar is improved when heat sealing is performed, which makes it possible to reduce the sealing time and sealing temperature, and suppress the occurrence of wrinkles and the like that accompany the heat sealing. Such a laminate is suitable for producing a packaging bag made from a mono-material.

The sealant layer and the intermediate layer can be laminated via the adhesive agent layer S described above. The sealant layer and the intermediate layer are bonded together by applying an adhesive agent to the intermediate layer, and then bonding the sealant layer. If the adhesive agent is a solvent-free two-liquid curing urethane-based adhesive agent, the intermediate layer is not subjected to a thermal load during solvent drying. Therefore, the inorganic oxide layer and the gas barrier coating layer are less likely to be damaged due to dimensional changes in the intermediate layer, and the barrier properties are less likely to deteriorate.

It is necessary for the sealant layer to have a surface softening temperature $T_2$ (°C) measured by local thermal analysis (LTA) that satisfies the following condition.

$$T_2 < 150°C$$

As a result of $T_2$ being lower than 150°C, a sufficient seal strength can be obtained even in a case where the heat sealing temperature is lowered (for example, to about 145°C). Consequently, the heat sealing tolerance of the laminate can be widened. From the viewpoint of enhancing the effect above, $T_2$ may be 148°C or lower, or 147°C or lower. On the other hand, from the viewpoint of suppressing fusion between the sealant layers and bleed-out of additives during retort treatment and boiling treatment, $T_2$ may be 80°C or higher, or 100°C or higher. The softening temperature $T_2$ of the sealant layer surface may be 80°C or higher and 150°C or lower, 80°C or higher and 148°C or lower, 80C or higher and 147°C or lower, 100°C or higher and 150°C or lower, 100°C or higher and 148°C or lower, or 100°C or higher and 147°C or lower. The softening temperature of the sealant layer surface can be adjusted by, for example, the degree of crystallinity, the molecular weight, and the mixing ratio in a copolymer. Note that the measurement method of the softening temperature is as described above.

In addition, from the viewpoint of suppressing the occurrence of inner surface fusion during retort treatment (adhesion of unsealed, heat seal surfaces to each other caused by the heat applied during retort treatment), $T_2$ may also satisfy the following condition.

$$T_2 \geqq 135°C$$

In the laminate, it is preferable that the difference $(T_1 - T_2)$ between the softening temperature $T_1$ of the substrate layer surface and the softening temperature $T_2$ of the sealant layer surface satisfies the following condition.

$$(T_1 - T_2) > 53°C$$

When $T_1 - T_2$ is greater than 53°C, the tolerance in the heat sealing temperature at which heat shrinkage of the laminate can be suppressed while a sufficient seal strength is ensured can be widened. From the viewpoint of enhancing the effect above, $T_1 - T_2$ may be 55°C or more, 58°C or more, or 60°C or more.

The laminate may contain 90% by mass or more of polypropylene based on the total amount of the laminate. As a result, the laminate can be said to be a packaging material made of a single material (mono-material), and has excellent recyclability. From the viewpoint of further improving recyclability, the polypropylene content in the laminate may be 95% by mass or more based on the total amount of the laminate.

In the laminate, in a case where heat sealing is performed with the sealant layers of the laminate facing each other using a heat sealer having an upper side made of metal, and a lower side made of silicone rubber, under conditions of an upper seal actual temperature of 145°C, a lower seal actual temperature of 90°C, a seal pressure of 0.3 MPa, and a heating time of 1 second, the seal strength of the obtained sealed portion is preferably 20 N/15 mm or more, and more preferably 25 N/15 mm or more. By satisfying the conditions above, the heat seal tolerance of the laminate can be widened.

In the laminate, in a case where heat sealing is performed with the sealant layers of the laminate facing each other using a heat sealer having an upper side made of metal, and a lower side made of silicone rubber, under conditions of an upper seal actual temperature of 160°C, a lower seal actual temperature of 90°C, a seal pressure of 0.3 MPa, and a heating time of 1 second, the heat shrinkage ratio of the obtained sealed portion is preferably less than 3%, and more preferably 2.8% or less. By satisfying the conditions above, the heat seal tolerance of the laminate can be widened.

In the laminate, in a case where heat sealing is performed with the sealant layers of the laminate facing each other using a heat sealer having an upper side made of metal, and a lower side made of silicone rubber, under conditions of a lower seal actual temperature of 90°C, a seal pressure of 0.3 MPa, and a heating time of 1 second while varying the upper seal actual temperature, and when a minimum temperature of the upper seal actual temperature at which a seal strength of an obtained sealed portion reaches 20 N/15 mm is denoted by $T_L$, and a maximum temperature of the upper seal actual temperature at which a heat shrinkage ratio of the obtained sealed portion can be maintained at less than 3% is denoted by $T_H$, the value of $T_H - T_L$ is preferably 15°C or more, and more preferably 20°C or more. By satisfying the conditions above, the heat seal tolerance of the laminate can be widened.

The laminate according to the present embodiment has a wide tolerance in the heat sealing temperature at which heat shrinkage of the laminate can be suppressed, while a sufficient seal strength is ensured. Therefore, it is possible to suppress deterioration of packaging material quality during heat sealing due to bag distortion, reduced barrier properties, and the like, and a decrease in the mass producibility of the packaging bag. That is, according to the present disclosure, it is possible to provide a laminate (packaging laminate) that has a wide heat seal tolerance that provides excellent mass production stability of the packaging bag even when using a PP mono-material packaging material.

<Packaging Bag>

The packaging bag is formed by producing a bag using the laminate described above and is not particularly limited in shape, and may be, for example, a packaging bag formed by folding a single laminate sheet in half such that the sealant layers face each other, and then heat sealing three sides to form a bag shape, a packaging bag formed by stacking two laminate sheets such that the sealant layers face each other, and then heat sealing four sides to form a bag shape, or a self-supporting standing pouch formed by stacking two laminate sheets together such that the sealant layers face each other and then sealing the laminates together by also interposing a base material. The packaging bag can accommodate contents such as food, medicine, and the like, and can be subjected to heat sterilization treatment such as retort treatment or boiling treatment.

Retort treatment is generally a method of sterilizing microorganisms such as mold, yeast, and bacteria by pressure for the purpose of preserving foods, medicines, and the like. Typically, packaging bags in which food or the like is packaged are subjected to pressure sterilization treatment under conditions of 105 to 140°C and 0.15 to 0.30 MPa for 10 to 120 minutes. Retort devices include steam-type devices that utilize heated steam, and hot water-type devices that use pressurized and heated water, and the devices are appropriately used depending on the sterilization conditions of the contents, such as food. Boiling treatment is a method of performing moist-heat sterilization for preserving food products, medicines, and the like. Typically, depending on the contents, packaging bags in which food or the like is packaged are subjected to moist-heat sterilization treatment under conditions of 60 to 100°C and atmospheric pressure for 10 to 120 minutes. Boiling treatment is generally performed at a temperature of 100°C or lower using a hot water tank. Examples of the method include batch-type methods, in which the packaging bag is immersed in a hot water tank at a fixed temperature followed by removal after treatment for a fixed time, and continuous-type methods, in which the packaging bag is treated by being passed through a water tank serving as a tunnel.

Because the packaging bag described above shows little deformation when producing a bag, the packaging bag has excellent transportability and workability when sealing contents.

[Examples]

The present disclosure will be described in more detail with reference to the following examples, but the present disclosure is not limited to the examples.

<Preparation of Adhesion Layer Forming Composition>

An acrylic polyol and tolylene diisocyanate were mixed such that the number of NCO groups in the tolylene diisocyanate became equivalent to the number of OH groups in the acrylic polyol, and the mixture was then diluted with ethyl acetate such that solid content (the total amount of acrylic polyol and tolylene diisocyanate) became 5% by mass. To the mixed solution after dilution, β-(3,4-epoxycyclohexyl)trimethoxysilane was further added in an amount of 5% by mass relative to 100 total parts by mass of acrylic polyol and tolylene diisocyanate, and the adhesion layer forming composition (anchor coating agent) was prepared by mixing these components together.

<Preparation of Gas Barrier Coating Layer Forming Composition>

The gas barrier coating layer forming composition was prepared by mixing each of liquids A, B and C described below in a mass ratio of 65/25/10.

Liquid A: A hydrolysis solution with a solid content of 5% by mass ($SiO_2$ equivalent) obtained by adding 72.1 g of 0.1 N hydrochloric acid to 17.9 g of tetraethoxysilane ($Si(OC_2H_5)_4$) and 10 g of methanol, and then hydrolyzing the mixture with stirring for 30 minutes.

Liquid B: A 5% by mass water/methanol solution of polyvinyl alcohol (water:methanol mass ratio of 95:5).

Liquid C: A hydrolysis solution obtained by diluting 1,3,5-tris(3-trialkoxysilylpropyl)isocyanurate with a mixed liquid of water/isopropyl alcohol (water:isopropyl alcohol mass ratio of 1:1) to a solid content of 5% by mass.

(Example 1)

The adhesion layer forming composition described above was applied by gravure roll coating to the corona-treated surface of a stretched polypropylene film (thickness 20 $\mu$m) having one side subjected to corona treatment as an intermediate layer, and then dried and cured at 60°C to form an adhesion layer made of a polyester-based polyurethane resin in which the coating amount was 0.1 g/m$^2$. Then, a transparent inorganic oxide layer (silica vapor deposition layer) made of silicon oxide and having a thickness of 30 nm was formed using a vacuum deposition device using an electron beam heating method. As the silica vapor deposition layer, the type of deposition material was adjusted to form a vapor deposition layer having an O/Si ratio of 1.8. The O/Si ratio was measured using an X-ray photoelectron spectroscopy analysis device (product name: JPS-90MXV, manufactured by JEOL Ltd.) as the measurement device, using non-monochromatized MgKα (1,253.6 eV) as the X-ray source, and an X-ray output of 100 W (10 kV-10 mA). The quantitative analysis used to determine the O/Si ratio used the relative sensitivity factors of 2.28 for O1s and 0.9 for Si2p, respectively.

Next, the gas barrier coating layer forming composition was applied onto the inorganic oxide layer by gravure roll coating, and then heated and dried in an oven under conditions of a tension of 20 N/m and a drying temperature of 120°C to form a gas barrier coating layer having a thickness of 0.3 $\mu$m. As a result, a gas barrier film having a laminated structure in the order intermediate layer/adhesion layer/inorganic oxide layer/gas barrier coating layer was obtained.

Next, a stretched polypropylene film (thickness: 20 μm) serving as the substrate layer was laminated onto the gas barrier coating layer of the gas barrier film described above by dry lamination via a two-component curing adhesive agent (product name: base agent A525 / curing agent A52, manufactured by Mitsui Chemicals, Inc.). Then, a corona treatment was carried out with respect to the non-corona treated surface of the intermediate layer, and a non-stretched polypropylene film (thickness: 60 μm) serving as the sealant layer was laminated by dry lamination via a two-component curing adhesive agent (product name: base agent A525 / curing agent A52, manufactured by Mitsui Chemicals, Inc.). As a result, a laminate having a laminate structure in the order substrate layer/adhesive agent layer/gas barrier coating layer/inorganic oxide layer/adhesion layer/intermediate layer/adhesive agent layer/sealant layer was produced. The thickness of each of the adhesive agent layers was 3 μm. As the substrate layer, a stretched polypropylene film having a melting point and a surface softening temperature shown in Table 1 below was used. As the sealant layer, a stretched polypropylene film having a surface softening temperature shown in Table 1 below was used.

(Examples 2 to 9, and 11, and Comparative Examples 1 and 2)

The laminate was produced in the same manner as in Example 1, except that stretched polypropylene films having the melting points and surface softening temperatures shown in Table 1 below were used as the substrate layer, and a non-stretched polypropylene films having the surface softening temperatures shown in Table 1 below were used as the sealant layer.

(Example 10)

In the same manner as Example 1, a gas barrier film having a laminated structure in the order intermediate layer/adhesion layer/inorganic oxide layer/gas barrier coating layer was obtained. Next, a stretched polypropylene film (thickness: 20 μm) serving as the substrate layer was laminated onto the gas barrier coating layer of the gas barrier film described above by non-solvent lamination via a solvent-free two-component curing urethane-based adhesive agent (product name: TSN-4864A/TSN-4864B3, manufactured by Toyo-Morton Co., Ltd.). The solvent-free adhesive agent was applied using a roll coater. Next, corona treatment was carried out with respect to the non-corona treated surface of the intermediate layer, and then an non-stretched polypropylene film (thickness: 60 μm) serving as the sealant layer was laminated onto the intermediate layer by non-solvent lamination via a solvent-free two-component curing urethane-based adhesive agent (product name: TSN-4864A/TSN-4864B3, manufactured by Toyo-Morton Co., Ltd.). The solvent-free adhesive agent was applied using a roll coater. As a result, a laminate having a laminate structure in the order substrate layer/adhesive agent layer/gas barrier coating layer/inorganic oxide layer/adhesion layer/intermediate layer/adhesive agent layer/sealant layer was produced. The thickness of each of the adhesive agent layers was 2 μm. The same substrate layer and sealant layer as in Example 1 were used.

<Measurement of Melting Point>

The melting point of the substrate layer was measured by the method described below. The substrate layer was cut from each of the laminates produced in the Examples and Comparative Examples to prepare measurement samples. Using the measurement samples, the melting points (melting peak temperatures) were measured by differential scanning calorimetry (DSC) at a temperature ramp rate of 10°C/min. The differential scanning calorimeter used was a DSC7000X (product name) manufactured by Hitachi High-Tech Science Corporation.

<Measurement of Surface Softening Temperature>

The softening temperatures of the substrate layer surface and the sealant layer surface were measured by local thermal analysis (LTA) using an atomic force microscope according to the method described below. In a case where the softening temperature of the substrate layer surface was measured using the laminates produced in the Examples and Comparative Examples, the sealant layer side was subjected to corona treatment, and then fixed to a metal disk with an epoxy adhesive agent, and in a case where the softening temperature of the sealant layer surface was measured, the substrate layer side was subjected to corona treatment, and then fixed to a metal disk with an epoxy adhesive, and this was then used as the measurement sample. The corona treatment was carried out using a corona treatment machine (product name: CT-0212) manufactured by Kasuga Denki Co., Ltd. under a condition of 0.20 kW.

The atomic force microscope (AFM) was an MFP-3D-SA (product name) manufactured by Oxford Instruments Ltd., with a Ztherm system local thermal analysis option, the cantilever was an AN2-200 (product name) manufactured by Anasys Instruments having a spring constant of 0.5 to 3.5 N/m, and the softening temperature measurement was performed with respect to the surface of each measurement sample.

When the sample surface was heated after Detrend correction with the contact pressure of the cantilever (change in the deflection amount of the cantilever) set to 0.2 V, the voltage application rate (temperature ramp rate) set to 0.5 V/sec, and the maximum applied voltage set to 6.0 V, the sample surface expanded, resulting in a rise in the cantilever position. Further heating of the sample surface resulted in softening of the sample surface, and the measurement was ended when the cantilever position fell by 30 nm. In those cases where the Z displacement did not fall by 30 nm from the change point and reached the maximum applied voltage, the maximum applied voltage during the Detrend correction and during the measurement was increased by 0.5 V, and the measurement was performed again.

The applied voltage at the point where the vertical height (Z displacement) of the cantilever takes the maximum value was used as the applied voltage at the softening point, and the voltage value was read.

A calibration curve was created in order to calculate the softening temperature of the sample. The four types of calibration samples used were polycaprolactone (melting point: 60°C), low-density polyethylene (LDPE, melting point: 112°C), polypropylene (PP, melting point: 166°C), and polyethylene terephthalate (PET, melting point: 255°C). The maximum applied voltage during Detrend correction was 3.5 V for polycaprolactone, 5.5 V for low-density polyethylene, 6.7 V for polypropylene, and 7.9 V for polyethylene terephthalate. The contact pressure of the cantilever (the amount of change in the deflection amount of the cantilever) was set to 0.2 V, and the voltage application rate (temperature ramp rate) was set to 0.5 V/sec. The calibration samples were measured 20 times at different measurement positions, a calibration line was prepared by approximating the average applied voltage at the softening point and the melting point with a cubic function using the least squares method, and then used as the calibration curve.

Using the calibration curve of the applied voltage and the melting point (melting peak temperature), the applied voltage at the softening point of the substrate layer surface and the sealant layer surface was converted into a temperature, which was used as the softening temperature. The softening temperature was measured at 12 or more points within a 10 $\mu$m visual field, and the average value was calculated to determine the surface softening temperature of each measurement sample.

[Table 1]

| | Melting point [°C] | Surface softening temperature [°C] | | |
|---|---|---|---|---|
| | Substrate layer | Substrate layer ($T_1$) | Sealant layer ($T_2$) | $T_1 - T_2$ |
| Example 1 | 166.6 | 210 | 147 | 63 |
| Example 2 | 168.0 | 207 | 147 | 60 |
| Example 3 | 163.0 | 212 | 147 | 65 |
| Example 4 | 174.0 | 201 | 147 | 54 |
| Example 5 | 167.0 | 206 | 147 | 59 |
| Example 6 | 169.5 | 205 | 147 | 59 |
| Example 7 | 169.5 | 205 | 147 | 58 |
| Example 8 | 169.5 | 205 | 138 | 67 |
| Example 9 | 168.0 | 207 | 146 | 60 |
| Example 10 | 166.6 | 210 | 147 | 63 |
| Example 11 | 169.5 | 205 | 130 | 75 |
| Comparative Example 1 | 161.0 | 200 | 147 | 53 |
| Comparative Example 2 | 168.0 | 207 | 153 | 53 |

<Preparation of Heat Sealed Sample>

The laminates obtained in the Examples and Comparative Examples were cut into a size of 60 mm x 120 mm such that the MD direction was the longitudinal direction. The cut laminates were folded in half by folding the center portion in the longitudinal direction so that the sealant layers faced each other, and one side opposite the folded portion (at a position 3 mm or more away from the end portion) was heat sealed over a width of 10 mm using a heat sealer manufactured by Tester Sangyo Co., Ltd. (model number: TP-701-B). The heat sealing conditions were as described below. Then, the folded portion was cut with scissors so that the upper and lower laminates of the stacked structure had approximately equal lengths, and the upper and lower laminates were separated. The heat sealed sample was obtained in this manner.

(Heat Sealing Conditions)

Upper seal bar: A 10 mm-wide metal seal bar (aluminum alloy 2000 series (Al--Cu)) was used, and the actual seal temperature was varied from 130°C to 165°C in 5°C increments
Lower seal bar: A 50 mm-wide seal bar made of silicone rubber was used, and the actual seal temperature was fixed at 90°C
Seal pressure: 0.3 MPa
Heating time: 1.0 sec

<Measurement of Seal Strength>

The heat sealed sample was cut with a cutter to size of width 15 mm × length 60 mm to obtain a seal strength measurement sample having a narrow rectangular shape. The width direction of the seal strength measurement sample was perpendicular to the width direction of the sealed portion. The obtained seal strength measurement samples were subjected to a peel test of the sealed portion under normal conditions (23°C, 50% RH) using a Tensilon universal tester (product name: AGS-100NX, manufactured by Shimadzu Corporation) with a chuck distance of 10 mm and a peel rate of 100 m/min. The seal strengths at each actual seal temperature are shown in Table 2. A seal strength of 20 N/15 mm or more was determined to be a level that does not cause problems under actual use, and the minimum upper seal actual temperature at which a seal strength of 20 N/15 mm or more was obtained was recorded as $T_L$ (°C). The $T_L$ values are shown in Table 3.

<Measurement of Heat Shrinkage Ratio>

The length A (mm) of the sealed portion of the heat sealed sample in the TD direction (direction perpendicular to the width direction of the sealed portion) and the lengths B and C (mm) of the unsealed portions in the TD direction 3 mm away from both ends of the sealed portion in the width direction were measured, and the heat shrinkage of the sealed portion was calculated using the equation below. It should be noted that the lengths B and C are the lengths of parts that are sufficiently separated from the sealed portion and are not affected by heat.

$$\text{Heat shrinkage ratio (\%)} = [1 - A/\{(B+C)/2\}] \times 100$$

The heat shrinkage ratios at each actual seal temperature (155 to 165°C) are shown in Table 2. A heat shrinkage ratio of less than 3% was determined to be a level that does not pose a problem in practical use, and the maximum upper seal actual temperature at which a heat shrinkage ratio of less than 3% could be maintained was recorded as $T_H$ (°C). The $T_H$ values are shown in Table 3.

<Evaluation of Distortion>

The presence or absence of distortion (heat wrinkles) in the sealed portion of the heat sealed sample at an upper seal actual temperature of 160°C was visually observed and evaluated according to the following criteria. An evaluation of B or higher indicates a level that does not cause problems under actual use. The results are shown in Table 3.

A: No distortion (heat wrinkles) observed in either the sealed portion or non-sealed portions near the sealed portion
B: Some distortion (heat wrinkles) observed in the sealed portion, but no distortion (heat wrinkles) is observed in the non-sealed portions near the sealed portion
C: Distortion (heat wrinkles) observed in both the sealed portion and non-sealed portions near the sealed portion

<Heat Seal Tolerance>

The difference $(T_H - T_L)$ between the maximum upper seal actual temperature $T_H$ at which the heat shrinkage ratio of the sealed portion can be maintained at less than 3%, and the minimum upper seal actual temperature $T_L$ at which the seal strength of the sealed portion reaches 20 N/15 mm or more was used as the heat seal tolerance of the laminate, and was evaluated according to the following criteria. An evaluation of B or higher indicates a level that does not cause problems under actual use. The results are shown in Table 3.

A: $T_H$ - $T_L$ is 20°C or more
B: $T_H$ - $T_L$ is 15°C or more and less than 20°C
C: $T_H$ - $T_L$ is 10°C or more and less than 15°C
D: $T_H$ - $T_L$ is less than 10°C

[Table 2]

| | Seal strength [N/15 mm] | | | | | | | | Heat shrinkage ratio [%] | | |
|---|---|---|---|---|---|---|---|---|---|---|---|
| Upper seal actual temperature | 130°C | 135°C | 140°C | 145°C | 150°C | 155°C | 160°C | 165°C | 155°C | 160°C | 165°C |
| Lower seal actual temperature | 90°C | | | | | | | | 90°C | | |
| Example 1 | 1.0 | 4.9 | *27.3* | 30.5 | 31.4 | 26.1 | 32.1 | - | 1.1 | *1.3* | 3.2 |
| Example 2 | 0.4 | 1.1 | 6.5 | *27.1* | 29.9 | 34.3 | 37.1 | - | 1.5 | *2.8* | 6.7 |
| Example 3 | 0.4 | 1.1 | 11.0 | *28.2* | 31.0 | 38.4 | 32.1 | - | 1.5 | *2.5* | 5.2 |
| Example 4 | 0.3 | 1.0 | 7.4 | *26.9* | 34.9 | 38.9 | 42.8 | - | 0.7 | *1.8* | *2.8* |
| Example 5 | 0.3 | 1.1 | 7.9 | *29.7* | 31.0 | 34.8 | 34.8 | - | 0.6 | *1.7* | 5.1 |
| Example 6 | - | - | 8.8 | *28.9* | 29.5 | 33.5 | 37.8 | - | 0.7 | *1.7* | 3.1 |
| Example 7 | 0.2 | 0.9 | 12.6 | *29.2* | 31.2 | 31.2 | 34.1 | - | 0.5 | *0.6* | 4.1 |
| Example 8 | 9.3 | *26.4* | 24.8 | 25.7 | 33.9 | 27.6 | 36.6 | - | 1.1 | 1.7 | *2.2* |
| Example 9 | 1.9 | 7.3 | 13.5 | *26.7* | 25.2 | 31.5 | 28.9 | - | 1.0 | *0.7* | 5.8 |
| Example 10 | 1.1 | 5.0 | 27.2 | 30.4 | 31.4 | 26.1 | 32.1 | | 1.1 | *1.3* | 3.1 |
| Example 11 | 9.6 | *28.0* | 27.2 | 26.8 | 26.5 | 27.1 | 28.2 | - | 1.0 | 1.8 | *2.1* |
| Comparative Example 1 | - | - | 6.3 | *27.4* | 31.2 | 34.3 | 45.4 | - | *1.6* | 4.0 | 5.0 |
| Comparative Example 2 | - | - | 0.1 | 0.2 | 0.6 | 2.1 | 8.0 | *25.8* | 1.1 | *2.1* | 3.3 |

[Table 3]

| | Distortion of produced bag | $T_L$ [°C] | $T_H$ [°C] | Heat seal tolerance ($T_H$ - $T_L$) [°C] | |
|---|---|---|---|---|---|
| Example 1 | B | 140 | 160 | 20 | A |
| Example 2 | B | 145 | 160 | 15 | B |
| Example 3 | B | 145 | 160 | 15 | B |
| Example 4 | A | 145 | 165 | 20 | A |
| Example 5 | B | 145 | 160 | 15 | B |
| Example 6 | A | 145 | 160 | 15 | B |
| Example 7 | A | 145 | 160 | 15 | B |
| Example 8 | B | 135 | 165 | 30 | A |
| Example 9 | A | 145 | 160 | 15 | B |
| Example 10 | A | 140 | 160 | 20 | A |
| Example 11 | B | 135 | 165 | 30 | A |
| Comparative Example 1 | c | 145 | 155 | 10 | c |

(continued)

| | Distortion of produced bag | $T_L$ [°C] | $T_H$ [°C] | Heat seal tolerance ($T_H$ - $T_L$) [°C] | |
|---|---|---|---|---|---|
| Comparative Example 2 | B | 165 | 160 | -5 | D |

[Reference Signs List]

11      Substrate layer

12      Intermediate layer

13      Sealant layer

S       Adhesive agent layer

100     Laminate

**Claims**

1.  A laminate comprising at least a substrate layer, an intermediate layer, and a sealant layer, wherein

    the substrate layer is disposed on one outermost surface of the laminate, and the sealant layer is disposed on another outermost surface of the laminate,
    the substrate layer, the intermediate layer, and the sealant layer each contain polypropylene,
    an inorganic oxide layer and a gas barrier coating layer are provided on a surface of the substrate layer that faces the intermediate layer, or on at least one surface of the intermediate layer, and
    when $T_1$ is a softening temperature at a surface of the substrate layer, and $T_2$ is a softening temperature at a surface of the sealant layer measured by local thermal analysis (LTA), $T_1$ and $T_2$ satisfy the following conditions.

$$T_1 > 200°C$$

$$T_2 < 150°C$$

2.  The laminate according to claim 1, wherein
    $T_1$ and $T_2$ satisfy the following condition.

$$(T_1 - T_2) > 53°C$$

3.  The laminate according to claim 1, wherein
    in a case where heat sealing is performed with the sealant layers of the laminate facing each other using a heat sealer having an upper side made of metal, and a lower side made of silicone rubber, under conditions of an upper seal actual temperature of 145°C, a lower seal actual temperature of 90°C, a seal pressure of 0.3 MPa, and a heating time of 1 second, a seal strength of an obtained sealed portion is 20 N/15 mm or more.

4.  The laminate according to claim 1, wherein
    in a case where heat sealing is performed with the sealant layers of the laminate facing each other using a heat sealer having an upper side made of metal, and a lower side made of silicone rubber, under conditions of an upper seal actual temperature of 160°C, a lower seal actual temperature of 90°C, a seal pressure of 0.3 MPa, and a heating time of 1 second, a heat shrinkage ratio of an obtained sealed portion is less than 3%.

5.  The laminate according to claim 1, wherein
    in a case where heat sealing is performed with the sealant layers of the laminate facing each other using a heat sealer having an upper side made of metal, and a lower side made of silicone rubber, under conditions of a lower seal actual temperature of 90°C, a seal pressure of 0.3 MPa, and a heating time of 1 second while varying an upper seal actual temperature, and when a minimum temperature of the upper seal actual temperature at which a seal strength of an obtained sealed portion reaches 20 N/15 mm is denoted by $T_L$, and a maximum temperature of the upper seal actual temperature at which a heat shrinkage ratio of the obtained sealed portion can be maintained at less than 3% is denoted by $T_H$, a value of $T_H - T_L$ is 15°C or more.

6. The laminate according to claim 1, wherein
$T_2$ satisfies the following condition.

$$T_2 \geqq 135°C$$

7. The laminate according to claim 1, wherein
the substrate layer and the intermediate layer, and the intermediate layer and the sealant layer are each adhered via an adhesive agent layer using a two-component curing urethane-based adhesive agent.

8. The laminate according to claim 7, wherein
at least one of the substrate layer and the intermediate layer, and the intermediate layer and the sealant layer are adhered via an adhesive agent layer using a solvent-free two-component curing urethane-based adhesive agent.

9. A packaging bag obtained by producing a bag using the laminate according to any one of claims 1 to 8.

# FIG.1

## INTERNATIONAL SEARCH REPORT

| International application No. |
| --- |
| **PCT/JP2023/044864** |

### A. CLASSIFICATION OF SUBJECT MATTER

**B32B 27/32**(2006.01)i; **B65D 65/40**(2006.01)i
FI:  B32B27/32 E; B65D65/40 D

According to International Patent Classification (IPC) or to both national classification and IPC

### B. FIELDS SEARCHED

Minimum documentation searched (classification system followed by classification symbols)

B32B27/32; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2021/220935 A1 (TOPPAN PRINTING CO., LTD.) 04 November 2021 (2021-11-04) paragraphs [0003], [0010]-[0084], claims | 1, 6-9 |
| A | entire text | 2-5 |
| Y | JP 2005-307112 A (MITSUI CHEMICALS, INC.) 04 November 2005 (2005-11-04) claims, paragraph [0004] | 1, 6-9 |
| A | entire text | 2-5 |
| Y | JP 2004-43545 A (MITSUI CHEMICALS, INC.) 12 February 2004 (2004-02-12) claims, paragraph [0004] | 1, 6-9 |
| A | entire text | 2-5 |
| Y | JP 2004-35730 A (JAPAN POLYCHEM CORP.) 05 February 2004 (2004-02-05) claims, paragraph [0004] | 1, 6-9 |
| A | entire text | 2-5 |

☑ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 March 2024** | **19 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2023/044864** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 2000-85073 A (IDEMITSU PETROCHEMICAL CO., LTD.) 28 March 2000 (2000-03-28) claims, paragraph [0004] | 1, 6-9 |
| A | entire text | 2-5 |
| P, A | JP 7377425 B2 (TOPPAN HOLDINGS INC.) 10 November 2023 (2023-11-10) entire text | 1-9 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2021/220935 | A1 | 04 November 2021 | US | 2023/0053232 | A1 | |
| | | | | paragraphs [0004], [0024]-[0063], claims | | | |
| | | | | EP | 4144522 | A1 | |
| | | | | CN | 115427228 | A | |
| JP | 2005-307112 | A | 04 November 2005 | (Family: none) | | | |
| JP | 2004-43545 | A | 12 February 2004 | (Family: none) | | | |
| JP | 2004-35730 | A | 05 February 2004 | (Family: none) | | | |
| JP | 2000-85073 | A | 28 March 2000 | (Family: none) | | | |
| JP | 7377425 | B2 | 10 November 2023 | WO | 2023/095915 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178357 A